**Europäisches Patentamt**

**European Patent Office**

**Office européen des brevets**

(19)

(11) Veröffentlichungsnummer: **0 133 456**

**A2**

# (12) EUROPÄISCHE PATENTANMELDUNG

(21) Anmeldenummer: **84105716.9**

(22) Anmeldetag: **18.05.84**

(51) Int. Cl.⁴: **B 23 Q 37/00**

(30) Priorität: **04.08.83 DE 3328230**

(43) Veröffentlichungstag der Anmeldung:
**27.02.85 Patentblatt 85/9**

(84) Benannte Vertragsstaaten:
**AT BE CH FR GB IT LI NL SE**

(71) Anmelder: **Brose Werkzeugmaschinen GmbH & Co. KG**
**Waldmeisterstrasse 80**
**D-8000 München 45(DE)**

(72) Erfinder: **Kölblin, Rolf**
**Hohe Rainäckerstrasse 16**
**D-8121 Fischen/Ammersee(SE)**

(72) Erfinder: **Huber, Manfred**
**Kaspar-Kerll-Strasse 19**
**D-8000 München 60(DE)**

(74) Vertreter: **Dipl.-Phys.Dr. Manitz Dipl.-Ing. Finsterwald**
**Dipl.-Ing. Grämkow Dipl.-Chem.Dr. Heyn**
**Dipl.-Phys.Rotermund**
**B.Sc. Morgan Robert-Koch-Strasse 1**
**D-8000 München 22(DE)**

(54) **Vorrichtung zur variablen Bearbeitung von Werkstücken.**

(57) Es wird eine Vorrichtung zur variablen Bearbeitung von Werkstücken beschrieben, die aus einem als Hohlträgereinheit aus gebildeten, die Funktionen des Maschinengehäuses übernehmenden Zentralmodul besteht und mehrere über vorgegebene mechanische und elektrische Schnittstellen wahlweise mit diesem Zentralmodul und untereinander verbindbare Horizontal- und Vertikalmodule umfaßt. Der Zentralmodul besitzt dabei eine außenliegende, axial begrenzt verschiebbar und drehbar gelagerte sowie verspannbare Trägerhülse, die sich nur über einen Teil der Höhe dieser Trägerhülse erstreckende, über den Trägerhülsenumfang verteilte Aufnahmen für Werkzeugträgereinheiten aufweist. Der Innenraum des Zentralmoduls ist mit Paß-Führungsflächen für einen Vertikalmodul versehen, welcher als Säuleneinheit mit bodenseitiger Anschlußfläche und zu den Führungsflächen des Zentralmoduls komplementären Außenführungsflächen ausgebildet ist. Die Horizontalmodule bestehen aus miteinander und/oder mit den Anschlußflächen von Zentralmodul und Säuleneinheit verbindbaren Schlitten.

EP 0 133 456 A2

./...

FIG. 1

0133456

Die Erfindung betrifft eine Vorrichtung zur variablen Bearbeitung von Werkstücken, bestehend aus einem mit Antrieben, Fluidversorgungen, Steuer- und Hilfseinrichtungen versehen und zumindest eine Aufnahme für insbesondere automatisch wechselbare Werkzeuge aufweisenden Maschinengehäuse, das mit steuerbaren Schlitteneinheiten verbindbar ist.

Vorrichtungen dieser Art sind allgemein bekannt und werden in der Praxis in großem Umfange eingesetzt. Nachteilig ist dabei in vielen Fällen, daß die generell einen vergleichsweise hohen Investitionsaufwand erfordernden Maschinen bezogen auf die jeweilige Bearbeitungsaufgabe nicht optimal eingesetzt werden können. Insbesondere bedingt durch sich ändernde Produktionsgegebenheiten kann beispielsweise eine für vielseitige Bearbeitungsaufgaben ausgebildete und damit einen sehr hohen Investitionsaufwand erfordernde Maschine häufig nur für Arbeiten eingesetzt werden, die auch mit einer weniger Möglichkeiten besitzenden und damit preiswerteren Maschine durchgeführt werden könnten, während es ebenfalls immer wieder vorkommt, daß geringfügig erweiterte Aufgaben von einer einfacheren Maschine nicht mehr erledigt werden können und deshalb zusätzliche Maschinen angeschafft werden müssen. Bei notwendigen Erweiterungsinvestitionen dieser Art muß wiederum darauf geachtet werden, daß die vorhandenen Werkzeuge und Spindelköpfe auch bei den neuen Maschinen verwendbar sind, um eine an sich unnötige Kostenbelastung zu vermeiden. Diese Forderung stellt aber hinsichtlich der bezüglich der Maschinenbeschaffung zu treffenden Entscheidungen wiederum eine störende Beschränkung dar.

Aufgabe der vorliegenden Erfindung ist es, eine Vorrichtung dieser Art in der Weise auszubilden, daß progressive, produktionsbegleitende Investitionen möglich werden, vorhandene Werkzeugsysteme zumindest weitestgehend weiterverwendet werden können und hinsichtlich geforderter Bearbeitungsmöglichkeiten und Verwendbarkeit von Werkzeugsystemen optimale Flexibilität sowohl hinsichtlich der grundsätzlichen Verwendbarkeit als auch der bearbeitungstechnischen und insbesondere zerspanungstechnischen Bedingungen gegeben ist.

Gelöst wird diese Aufgabe im wesentlichen dadurch, daß ein als Hohlträgereinheit ausgebildetes, die Funktionen des Maschinengehäuses übernehmendes Zentralmodul und mehrere über vorgegebene mechanische und elektrische Schnittstellen wahlweise mit dem Zentralmodul und untereinander verbindbare Horizontal- und Vertikalmodule vorgesehen sind, daß der eine bodenseitige Anschlußfläche aufweisende Zentralmodul eine außenliegende, axial begrenzt verschiebbar und drehbar gelagerte sowie verspannbare Trägerhülse aufweist, die sich nur über einen Teil der Höhe der Trägerhülse erstreckende, über den Trägerhülsenumfang verteilte Aufnahmen für Werkzeugträgereinheiten besitzt, daß der Innenraum des Zentralmoduls mit Paß-Führungsflächen für einen Vertikalmodul versehen ist, daß der Vertikalmodul als Säuleneinheit mit bodenseitiger Anschlußfläche und zu den Führungsflächen des Zentralmoduls komplementären Außenführungsflächen ausgebildet ist, und daß die Horizontal module aus miteinander und/oder mit den Anschlußflächen von Zentralmodul und Säuleneinheit verbindbaren Schlitten bestehen.

Durch die konsequente Aufteilung der erfindungsgemäßen Vorrichtung in einzelne Module mit spezieller Funktionszuordnung wird eine praktisch beliebig aufrüstbare und auch abrüstbare, nach Art eines Baukastensystems den jeweiligen Erfordernissen anpaßbare Vorrichtung geschaffen, die in ihrer einfachsten Ausführungsform aus dem auf einer stationären Trägerfläche befestigbaren Zentralmodul besteht, in dieser einfachsten Ausführungsform aber bereits alle Variationsmöglichkeiten hinsichtlich des Einsatzes unterschiedlichster Werkzeuge, Spindelköpfe und auch Sonderspindelköpfe bietet.

Durch einfache Kombination mit einem Vertikalmodul läßt sich eine in der Y-Richtung verfahrbare Anordnung schaffen, die wiederum mit einem Horizontalmodul oder zu einem Kreuzschlitten zusammengefaßten Horizontalmodulen kombinierbar ist. Geeignet vorgegebene mechanische und elektrische Schnittstellen ermöglichen diese Aufrüstungen oder Abrüstungen und vereinfachen die Durchführung solcher Umrüstungen in entscheidendem Maße.

Vorzugsweise umfaßt der Zentralmodul einen im wesentlichen zylindrischen Grundkörper mit bodenseitigem Flansch, wobei dieser Flansch zur Verbindung mit weiteren Modulen dient. Dem Anschlußflansch gegenüberliegend ist der Grundkörper mit einer Abschlußwand versehen, die als Träger für Antriebsmotore, Anschlußeinheiten und auch für eine Vorrichtung zum Gewichtsausgleich, die vorzugsweise hydraulisch ausgebildet ist, dient.

Grundkörper und Trägerhülse sind in Axialrichtung über stirnverzahnte Ringe und mittels im Bereich dieser Ringe gelegener Organe hydraulisch gegeneinander verspannbar, wobei im verspannten Zustand die erforderliche Zentrierung der Trägerhülse mit hoher Genauigkeit erreicht wird.

Nach einer weiteren Besonderheit der Erfindung ist der oberhalb der Aufnahmen für Werkzeugträgereinheiten gelegene Bereich von Trägerhülse und Grundkörper als mit Umlaufnuten versehener Druckmittelverteiler ausgebildet, der einerseits über Leitungen und/oder Bohrungen mit Versorgungsanschlüssen am Grundkörper und andererseits über Bohrungen mit den an der Trägerhülse vorgesehenen Aufnahmen verbunden ist.
Auf diese Weise ist es möglich, bestimmten Aufnahmepositionen spezielle Druckmittelzuführungen zuzuordnen, welche für spezielle Werkzeugträgereinheiten bzw. Mehrspindel-Bohr- und Gewindeschneidköpfe, hydraulische Plandrehköpfe, NC-Plandrehköpfe, Spindelköpfe mit hydrodynamisch gelagerten Spindeln, Tieflochbohrspindelköpfe oder andere Sonderköpfe erforderlich sind.

Der Grundkörper des Zentralmoduls ist vorzugsweise zweiteilig ausgebildet, wobei die Trennebene oberhalb des Druckmittelverteilers gelegen ist. Auf diese Weise ist es möglich, mit dem unteren Teil des Grundkörpers wahlweise ein das Unterteil nach oben verlängerndes Zylinderteil, wie es im Fall einer Kombination von Zentralmodul und Vertikalmodul notwendig ist, oder eine Abschlußplatte zu verbinden, so daß sich in letzterem Fall eine wesent-

0133456

lich verringerte Bauhöhe ergibt, die vorteilhaft sein kann, wenn
die Vorrichtung nach der Erfindung in ihrer einfachsten Ausführungsform eingesetzt werden soll. Die zwischen einem Hauptantrieb und
dem Ankuppelbereich für die jeweils anzutreibende Werkzeugträgereinheit vorgesehenen Getriebe-, Kupplungs- und Hilfseinheiten sind
im Innenraum des Zentralmoduls in der Weise gehaltert und gelagert,
daß im Falle der Verwendung der Ausführungsform mit verringerter
Bauhöhe, d.h. bei Verbindung der Abschlußplatte mit dem Unterteil
des Grundkörpers lediglich eine verkürzte Antriebswelle verwendet
werden muß und ansonsten nur problemfrei vorzunehmende Anpassungen
auszuführen sind.

Die Schwenkbewegung der Trägerhülse ist vorzugsweise in beiden
Richtungen mittels einer Sperreinrichtung in vorgebbarem Ausmaß,
insbesondere auf 270°, begrenzt. Diese wahlweise einsetzbare Sperreinrichtung ermöglicht es, zu Spindelköpfen, insbesondere NC-Plandrehköpfen führende elektrische Verbindungsleitungen auch bei Abkupplung vom Antrieb und bei Verschwenken der Trägerhülse unverändert zu belassen, so daß auch ohne Verwendung von Schleifringen
keine Gefahr einer unbeabsichtigten Beschädigung oder Zerstörung
dieser Verbindungsleitungen besteht und die entsprechenden Köpfe
stets für einen Einsatz durch Einschwenken in die Arbeitsposition
zur Verfügung stehen.

Ein weiteres wesentliches Merkmal der Erfindung besteht darin,
daß zwischen den an der Trägerhülse vorgesehenen Aufnahmen und
den jeweils anzukuppelnden Spindelstöcken und sonstigen Köpfen
jeweils eine Adapterplatte vorgesehen ist. In Abhängigkeit vom
jeweiligen Spindelstock bzw. von der jeweils anzuschließenden
Einheit wird dabei eine Adapterplatte mit integrierter Spann-,
Indexier- und gegebenenfalls Entspanneinrichtung und Durchleitkanälen verwendet.

Für nicht belegte Aufnahmen sind vorteilhafterweise als Verschlußplatte ausgebildete Adapterplatten vorgesehen.      .

Mittels dieser Adapterplatten ist es in einfacher Weise möglich, Spindelstöcke für Steilkegel unterschiedlicher Größe und/oder unterschiedlicher Spindelzahl, mehrspindelige Spindelköpfe, NC-Plandrehköpfe sowie Sonderköpfe anzukuppeln, wobei vorzugsweise sämtliche für den Betrieb dieser Spindelstöcke oder -köpfe erforderlichen Zuleitungen durch die jeweilige Adapterplatte erfolgen.

Für die Praxis bedeutsam ist, daß auch das Ankuppeln von Spindelköpfen für hydrodynamisch gelagerte Spindeln sowie das Ankuppeln von Tieflochbohrspindelköpfen möglich ist, da die dazu erforderliche Druckmittel- bzw. Spülmittelzuführung ebenfalls in der bereits beschriebenen Weise erfolgen kann und es auch möglich ist, die jeweils benötigten Drehzahlen vorzugeben.

Von besonderer Bedeutung ist im Rahmen der Erfindung, daß die jeweilige Spindeldrehzahl durch die über ein dem Hauptantrieb zugeordnetes Schaltgetriebe wählbare Drehzahl der Hauptwelle und/oder eine feste Übersetzung oder Untersetzung im Getriebe eines wählbaren Spindelstocks vorgebbar ist. Auf diese Weise wird erreicht, daß jedes Werkzeug mit der für seinen Betrieb optimalen Drehzahl, Schnittgeschwindigkeit und auch dem optimalen Drehmoment angetrieben werden kann.

Dem Zentralmodul ist vorzugsweise zusätzlich zum vorgesehenen Werkzeugwechsler ein Spindelstockwechsler und/oder ein Wechselsystem für mehrspindelige Spindelköpfe zugeordnet. Für Wechselvorgänge können dabei die Verfahrbewegungen resultierend aus den gegebenenfalls eingesetzten Horizontal- bzw. Vertikalmodulen genutzt werden.

Ein besonders vorteilhafter Werkzeugwechsler ist einem einheitlichen Werkzeugmagazin zugeordnet und besitzt einen linear verfahrbaren Wechselarm, der drei Ansteuerpositionen anfahren und in jeder der Positionen einen Werkzeugwechsel vornehmen kann. Die beiden seitlichen Positionen, die nacheinander angefahren werden, sind dabei einem Doppelspindler oder einem asymmetrischen Einzelspindler zugeordnet, während die mittlere Position zum Werkzeugwechsel bei einem Einspindelkopf dient.

Von besonderem Vorteil ist es ferner, einem am Grundkörper oberhalb der Trägerhülse angebrachten Magazin für Einzelwerkzeuge ein Zusatzmagazin zuzuordnen und zwischen diesen beiden Magazinen einen Doppelwechselarm mit vertikaler Schwenkachse vorzusehen. Bevorzugt wird dieses Zusatzmagazin als zweite Etage eines Magazins für mehrspindelige Spindelköpfe und/oder Spindelstöcke ausgebildet, wobei zweckmäßigerweise der dafür vorgesehene Hauptwechsler mit dem Doppelwechselarm für die Einzelwerkzeuge kombiniert wird.

Die einzelnen Module der erfindungsgemäßen Vorrichtung eignen sich zur Ankupplung an beliebige Transfersysteme, und zwar sowohl bei synchronem als auch bei asynchronem Transfer, sowie zur Zusammenarbeit mit jedem Palettensystem und Werkstückbewegungseinrichtungen, insbesondere zur Raumwinkelbearbeitung.

Aufgrund der universellen Ankupplungsmöglichkeiten an den entsprechenden Aufnahmen der Trägerhülse bzw. an den dort vorgesehenen Adaptern können praktisch beliebige Einheiten angeschlossen werden, was wiederum zur Folge hat, daß jeder Benutzer die Möglichkeit hat, bei ihm bereits vorhandene Werkzeugsysteme zumindest in der bisherigen Weise weiterzuverwenden, jedoch durch zusätzlichen Einsatz von Wechselspindelstöcken optimale Anpassungen an die jeweilige Bearbeitungsaufgabe vornehmen kann. Dies ist unter wirtschaftlichen Erwägungen von ganz besonderer Bedeutung.

Weitere vorteilhafte Ausgestaltungen der Erfindung sind in den Unteransprüchen angegeben.

Die Erfindung wird nachfolgend anhand von Ausführungsbeispielen
unter Bezugnahme auf die Zeichnung erläutert; in der Zeichnung
zeigt:

Fig. 1  eine schematische Darstellung der verschiedenen miteinander kombinierbaren Module einer Vorrichtung nach
        der Erfindung, und

Fig. 2  eine perspektivische Darstellung einer bevorzugten
        Ausführungsform der Erfindung in Verbindung mit einem
        Werkstückpalettenspeicher und einem Magazin für mehrspindelige Spindelköpfe, Spindelstöcke und dergleichen
        sowie für Einzelwerkzeuge.

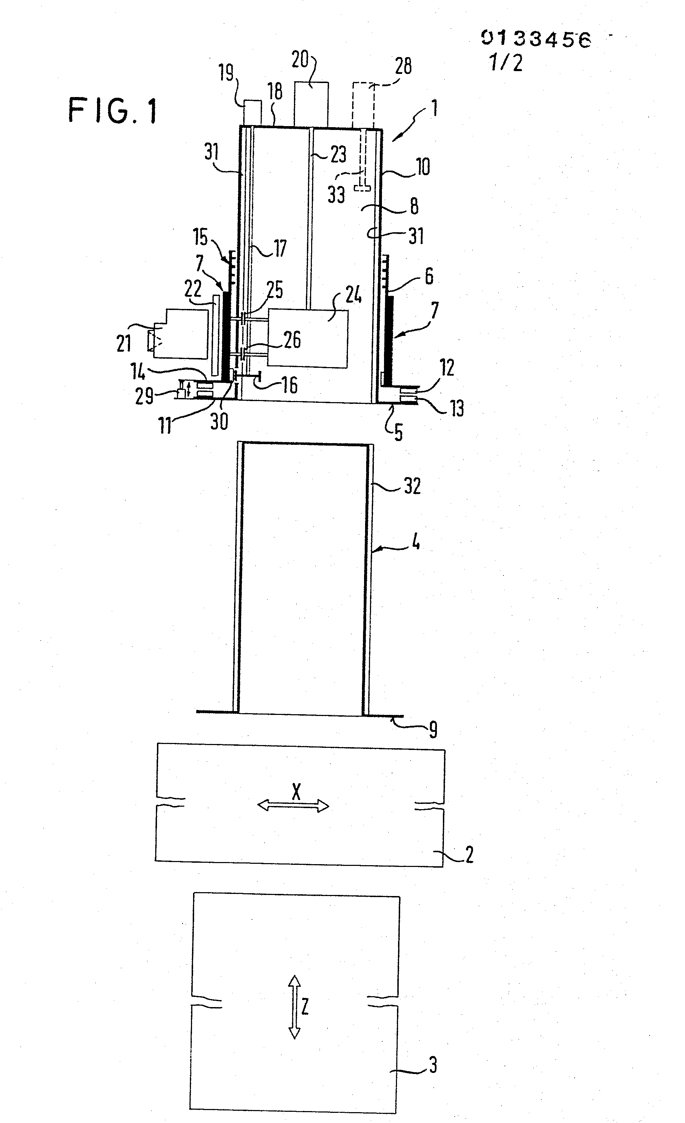

Nach Fig. 1 sind ein Zentralmodul 1, ein der X-Richtung zugeordneter Horizontalmodul 2, ein der Z-Richtung zugeordneter
Horizontalmodul 3 sowie ein Vertikalmodul 4 vorgesehen.

Bei den Horizontalmodulen 2, 3 kann es sich um Schlittenkonstruktionen herkömmlicher Art handeln, die jedoch passende Anschlußflächen für den Vertikalmodul 4 und den Zentralmodul 1
besitzen müssen.

Der Zentralmodul 1 besitzt einen im wesentlichen zylindrischen
Grundkörper 10, der an seinem unteren Ende mit einem Flansch 11
ausgestattet ist. Die vom Grundkörper 10 abgewandte Fläche dieses
Flansches 11 bildet eine Anschluß- bzw. Verbindungsfläche 5, über
die der Zentralmodul 1 entweder an einer feststehenden Fläche oder
an einem der Horizontalmodule 2, 3 befestigt werden kann.

Der untere Bereich des Grundkörpers 10 des Zentralmoduls 1 ist
von einer Trägerhülse 6 umgeben, die axial begrenzt verschiebbar
und drehbar gelagert ist. Diese Trägerhülse 6 ist an ihrem unteren
Ende ebenfalls mit einem Flansch 14 ausgestattet, der dem Flansch
11 des Grundkörpers 10 gegenüberliegt.

Zwischen diesen beiden Flanschen 11 und 14 sind zwei miteinander
zusammenwirkende, stirnverzahnte Ringe 12, 13 angeordnet, wobei
der Ring 12 mit dem Flansch des Grundkörpers und der Ring 13 mit
dem Flansch der Trägerhülse fest verbunden ist. Benachbart zu diesen stirnverzahnten Zentrier- und Indexierringen 12, 13 befinden
sich Zylinder-Kolbenanordnungen 29, die einerseits ein Anheben
der Trägerhülse 6 und damit ein Entkuppeln der stirnverzahnten
Ringe 12, 13 und andererseits ein gegenseitiges Verspannen der
Ringe 12, 13 und damit ein Zentrieren der Trägerhülse 6 ermöglichen.

Die Trägerhülse 6 ist im Bereich ihres Ringflansches 14 mit einem
Ring-Zahnkranz 30 versehen, der mit einem Ritzel 16 zusammenwirkt,
das über eine Welle 17 mit einem Antriebsmotor 19 verbunden ist.
Auf diese Weise kann bei entkuppelten Zahnringen 12, 13 die Trägerhülse 6 in der jeweils gewünschten Weise relativ zum Grundkörper
10 verschwenkt werden.

Angrenzend an den Ringflansch 14 und gleichmäßig über den Umfang
verteilt besitzt die Trägerhülse 6 mehrere, insbesondere vier
Aufnahmen 7 für Werkzeugträgereinheiten. Mit diesen Aufnahmen 7
können über Adapterplatten 22 beispielsweise Spindelstöcke 21
für Steilkegel unterschiedlicher Größe und/oder unterschiedlicher
Spindelzahl befestigt werden.

In einem oberhalb der Aufnahmen 7 gelegenen Bereich der
Trägerhülse 6 ist ein schematisch angedeuteter und mit dem
Hinweis "Bezugszeichen 15" gekennzeichneter Druckmittelverteiler vorgesehen, der einerseits über Leitungen und/oder
Bohrungen mit Versorgungsanschlüssen am Grundkörper und andererseits über Bohrungen mit den Aufnahmen 7 an der Trägerhülse 6
verbindbar ist. Diese Bohrungen, die zumindest zum Teil in der
Anzahl und/oder in der Dimensionierung verschieden sein können, sind in Abhängigkeit von der Relativposition von Grundkörper 10 und Trägerhülse 6 verschließ- und freigebbar. Auf diese Weise können den einzelnen für die verschiedenen Aufnahmen 7 vorgesehen, über den Umfang des Grundkörpers verteilten Positionen zu ihrer jeweiligen Universalfunktion noch Sonderfunktionen zugeordnet werden, die wiederum abhängig sind von der Art der Werkzeugträgereinheit, die gerade an der jeweiligen Aufnahme vorgesehen ist.

Der Grundkörper 10 besitzt an seinem oberen Ende eine Abschlußwand 18, die als Träger für verschiedene Antriebsmotoren, insbesondere den Motor 19 zum Antrieb des Ritzels 16, den Hauptantriebsmotor 20 und einen wahlweise anbringbaren Motor 28 zur Verstellung des Zentralmoduls 1 in Y-Richtung dient.

Der Hauptantriebsmotor 20 ist über ein Schaltgetriebe und eine Welle 23 mit einer im Grundkörper 10 gehalterten Getriebe- und Steuereinheit 24 verbunden, mit der die jeweils an einer Aufnahme 7 über eine Adapterplatte 22 befestigte Werkzeugträgereinheit 21 über Kupplungen 25, 26 verbindbar ist.

Die Getriebe- und Steuereinheit 24 umfaßt ein Winkelgetriebe zur Übertragung der Antriebskraft über die Kupplung 25 zu der jeweiligen Werkzeugträgereinheit. Ferner sind in dieser Einheit Richteinrichtungen einschließlich Drehgeber, Blockierungselemente zur Fixierung von Spindel und Kupplungspositionen sowie weitere Hilfseinrichtungen enthalten.

Der beschriebene Zentralmodul stellt eine funktionell selbständige Einheit dar, die auf einem ortsfesten Träger montiert werden kann und in dieser einfachsten Form einer Bearbeitungsmaschine bereits eine hohe Variabilität hinsichtlich der in die jeweilige Bearbeitungsposition einschwenkbaren Werkzeugträgereinheiten und damit vielfältige Anwendungsmöglichkeiten bietet.

Der Zentralmodul 1 ist in seinem Innenraum mit Innenführungen 31 ausgestattet, die mit komplementär gestalteten Außenführungen 32 am Vertikalmodul 4 zusammenwirken können.

Wird der Vertikalmodul 4 in den Zentralmodul 1 eingefahren, so kann der Zentralmodul 1 als Gesamtheit in der Y-Richtung verfahren werden, wozu der Antriebsmotor 28 und ein schematisch dargestellter Kugeltrieb 33 vorgesehen sind. Zum Gewichtsausgleich kann eine in der Zeichnung nicht dargestellte, hydraulisch wirkende Abstützvorrichtung am Grundkörper 10 befestigt sein.

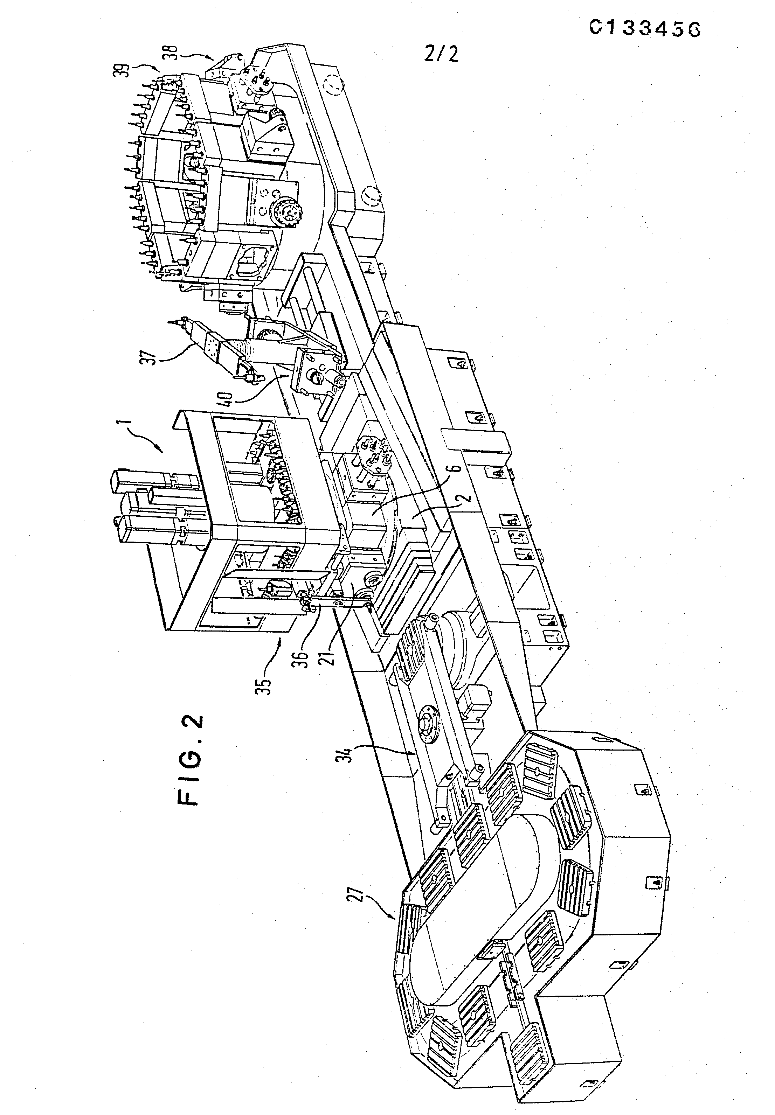

Die perspektivische Darstellung nach Fig. 2 zeigt eine Ausführungsform der Vorrichtung nach der Erfindung, bei der ein Zentralmodul 1 mit einem Horizontalmodul 2 sowie einem Werkstückpalettenspeicher 27 und einem Magazin 38, 39 kombiniert ist.
Zwischen dem Werkstückpalettenspeicher 27 und dem Zentralmodul 1 ist eine Palettenwechselvorrichtung 34 vorgesehen.
Die in einem oberhalb der Trägerhülse 6 angeordneten Werkzeugspeicher 35 vorgesehenen Einzelwerkzeuge, insbesondere Steilkegelwerkzeuge sind mittels eines Doppelwechselarms 36 mit horizontaler Schwenkachse in Spindelköpfe 21 oder sonstige Spindelaufnahmen einsetzbar.

Zwischen dem Magazin 38 für mehrspindlige Spindelköpfe und/oder Spindelstöcke und/oder Plandrehköpfe und dergleichen und dem Zentralmodul 1 ist ein horizontal verfahrbarer und verschwenkbarer Hauptwechsler 40 angeordnet.
Um die Kapazität des Magazins für Einzelwerkzeuge wesentlich zu erweitern, ist das Magazin für die Spindelköpfe und dergleichen

0133456

mit einer zweiten Etage 39 ausgestattet, in der Einzelwerkzeuge vorgesehen sind, die mittels eines Doppelwechselarms 37 mit vertikaler Drehachse in das zentralmodulseitige Magazin 35 eingewechselt werden können. Der Doppelwechselarm 37 ist mit dem Hauptwechsler 40 zusammengefaßt und vorzugsweise so ausgebildet, daß Schwenk- und Vertikalbewegung dieses Doppelwechselarms 37 unabhängig vom Hauptwechsler 40 gesteuert werden können. Der Horizontalantrieb für den Hauptwechsler 40 kann auch für den Doppelwechselarm 37 genutzt werden.

Die durch die Erfindung erzielten Vorteile sind außerordentlich vielfältig und bestehen insbesondere in der Kombinierbarkeit der einzelnen Module untereinander und mit Zusatzeinheiten, wie z.B. Werkstückpalettenspeichern und Zusatz-Werkzeugspeichern, in der maximalen Variabilität der einzelnen Aufnahmen, in der einfachen Verschwenkbarkeit aller Aufnahmen aus einer Warteposition in die Arbeitsposition und umgekehrt, in der freien Wahl der der jeweiligen Zerspanungsaufgabe angepaßten Drehzahl, der Schnittgeschwindigkeit und des Drehmoments, in der Verwendbarkeit praktisch sämtlicher bekannter Werkzeugträgereinheiten, in der Anpaßbarkeit der Wahl der Werkzeuge und der Spindelköpfe an die jeweilige Bearbeitungsaufgabe, in der universellen Einsatzbarkeit bei Transfersystemen, Palettensystemen und Werkzeugbewegungseinrichtungen sowie in der Kombinierbarkeit mit den jeweils optimalen Werkzeugwechselsystemen.

- 14 -

0133456

Bezugszeichenliste

| | | | |
|---|---|---|---|
| 1 | Zentralmodul | 35 | Werkzeugmagazin |
| 2 | Horizontalmodul | 36 | Doppelwechselarm |
| 3 | Horizontalmodul | 37 | Doppelwechselarm |
| 4 | Vertikalmodul | 38 | erste Speicheretage |
| 5 | Anschlußfläche | 39 | zweite Speicheretage |
| 6 | Trägerhülse | 40 | Hauptwechsler |
| 7 | Aufnahme | | |
| 8 | Innenraum | | |
| 9 | Anschlußfläche | | |
| 10 | Grundkörper | | |
| 11 | Flansch | | |
| 12 | Ring stirnverzahnt | | |
| 13 | Ring stirnverzahnt | | |
| 14 | Ringflansch | | |
| 15 | Druckmittelverteiler | | |
| 16 | Ritzel | | |
| 17 | Welle | | |
| 18 | Abschlußwand | | |
| 19 | Antriebsmotor | | |
| 20 | Hauptantriebsmotor | | |
| 21 | Spindelstock | | |
| 22 | Adapterplatte | | |
| 23 | Welle | | |
| 24 | Steuereinheit | | |
| 25 | Kupplung | | |
| 26 | Kupplung | | |
| 27 | Werkstückpalettenspeicher | | |
| 28 | Motor | | |
| 29 | Zylinderkolbenanordnung | | |
| 30 | Ring-Zahnkranz | | |
| 31 | Innenführung | | |
| 32 | Außenführung | | |
| 33 | Kugeltrieb | | |
| 34 | Palettenwechselvorrichtung | | |

- 1 -

- Patentansprüche -

1. Vorrichtung zur variablen Bearbeitung von Werkstücken, bestehend aus einem mit Antrieben, Fluidversorgungen, Steuer- und Hilfseinrichtungen versehenen und zumindest eine Aufnahme für insbesondere automatisch wechselbare Werkzeuge aufweisenden Maschinengehäuse, das mit steuerbaren Schlitteneinheiten verbindbar ist,

   dadurch gekennzeichnet,

   daß ein als Hohlträgereinheit ausgebildetes, die Funktionen des Maschinengehäuses übernehmendes Zentralmodul (1) und mehrere über vorgegebene mechanische und elektrische Schnittstellen wahlweise mit dem Zentralmodul und untereinander verbindbare Horizontal- und Vertikalmodule (2, 3; 4) vorgesehen sind, daß der eine bodenseitige Anschlußfläche (5) aufweisende Zentralmodul (1) eine außenliegende, axial begrenzt verschiebbar und drehbar gelagerte sowie verspannbare Trägerhülse (6) aufweist, die sich nur über einen Teil der Höhe der Trägerhülse erstreckende, über den Trägerhülsenumfang verteilte
Aufnahmen (7) für Werkzeugträgereinheiten besitzt, daß der
Innenraum (8) des Zentralmoduls (1) mit Paß-Führungsflächen
(31) für einen Vertikalmodul (4) versehen ist, daß der
Vertikalmodul (4) als Säuleneinheit mit bodenseitiger Anschlußfläche (9) und zu den Führungsflächen (31) des Zentralmoduls (1) komplementären Außenführungsflächen (32) ausgebildet ist, und daß die Horizontalmodule (2, 3) aus miteinander und/oder mit den Anschlußflächen (5, 9) von Zentralmodul und Säuleneinheit verbindbaren Schlitten bestehen.

2. Vorrichtung nach Anspruch 1, dadurch  g e k e n n -
   z e i c h n e t ,  daß der Zentralmodul (1) einen im wesentlichen zylinderförmigen Grundkörper (10) mit bodenseitigem
   Flansch (11) aufweist, dessen untere Fläche die Anschlußfläche (5) bildet und dessen obere Fläche einen stirnverzahnten Ring (12) trägt, dessen zentrierender Gegenring (13)
   an der Unterseite eines am unteren Ende der Trägerhülse (6)
   angebrachten Ringflansches (14) vorgesehen ist.

3. Vorrichtung nach Anspruch 2, dadurch  g e k e n n -
   z e i c h n e t ,  daß der Grundkörper (10) des Zentralmoduls (1) an seinem der Anschlußfläche (5) gegenüberliegenden
   Ende zumindest im wesentlichen geschlossen und als Träger
   für Antriebs- und Anschluß- und Zusatzeinheiten (19, 20, 28)
   ausgebildet ist.

4. Vorrichtung nach Anspruch 1 und 2, dadurch  g e k e n n -
   z e i c h n e t ,  daß Grundkörper (10) und Trägerhülse (6)
   in Axialrichtung über die stirnverzahnten Ringe (12, 13)
   mittels im Bereich dieser Ringe (12, 13) gelegener Organe
   (29) hydraulisch gegeneinander verspannbar sind.

5. Vorrichtung nach Anspruch 1, dadurch  g e k e n n z e i c h -
   n e t ,  daß der oberhalb der Aufnahmen (7) gelegene Bereich von Trägerhülse (6) und Grundkörper (10) als mit Umlaufnuten versehener Druckmittelverteiler (15) ausgebildet ist,
der einerseits über Leitungen oder/und Bohrungen mit Versorgungsanschlüssen am Grundkörper (10) und andererseits
über Bohrungen mit den an der Trägerhülse (6) vorgesehenen
Aufnahmen (7) verbunden ist.

6. Vorrichtung nach Anspruch 5, dadurch  g e k e n n -
z e i c h n e t ,  daß vom Druckmittelverteiler (15) zu den
einzelnen Aufnahmen (7) führende, in der Anzahl und/oder
Dimensionierung zumindest zum Teil unterschiedliche Verbindungsbohrungen in Abhängigkeit von der Relativposition von
Grundkörper (10) und Trägerhülse (6) verschließ- und freigebbar sind.

7. Vorrichtung nach Anspruch 4, dadurch  g e k e n n -
z e i c h n e t ,  daß die Trägerhülse (6) relativ zum
Grundkörper (10) mittels eines Ritzels (16) verdrehbar ist,
das radial innerhalb und im Bereich der stirnverzahnten Ringe
(12, 13) angeordnet und über eine im Grundkörper (10) gelagerte
Welle (17) von einem auf der oberen Anschlußwand (18) des
Grundkörpers (10) angebrachten Motor (19) antreibbar ist.

8. Vorrichtung nach Anspruch 3, dadurch  g e k e n n -
z e i c h n e t ,  daß die zwischen dem auf der oberen Anschlußwand (18) des Grundkörpers (10) angeordneten Hauptantrieb (20) und dem Ankuppelbereich für die jeweils anzutreibende Werkzeugträgereinheit vorgesehenen Getriebe-,
Kupplungs- und Hilfseinheiten im Innenraum (8) des Zentralmoduls (1) gehaltert und gelagert sind.

9. Vorrichtung nach Anspruch 8, dadurch  g e k e n n -
z e i c h n e t ,  daß der Grundkörper (10) zweiteilig ausgebildet ist, wobei die Trennebene oberhalb des Druckmittelverteilers (15) gelegen ist.

10. Vorrichtung nach Anspruch 9, dadurch g e k e n n - z e i c h n e t , daß mit dem unteren Teil des Grundkörpers (1) wahlweise ein das Unterteil nach oben verlängerndes Zylinderteil oder eine Abschlußplatte verbindbar ist, wobei sowohl das Zylinderteil als auch die Abschlußplatte als Träger von Antriebs- und Hilfseinheiten dienen.

11. Vorrichtung nach Anspruch 1, dadurch g e k e n n - z e i c h n e t , daß zwischen dem Grundkörper (10) und dem Vertikalmodul (4) verspannbare Flachbahnführungen mit großem, vorzugsweise zumindest 8:1 betragendem Führungsverhältnis vorgesehen sind.

12. Vorrichtung nach Anspruch 1, dadurch g e k e n n - z e i c h n e t , daß der eine zylindrische Außenfläche besitzende Grundkörper (10) eine im Querschnitt polygone Innenkontur, insbesondere eine Vierkantkontur aufweist.

13. Vorrichtung nach Anspruch 1, dadurch g e k e n n - z e i c h n e t , daß oberhalb der Trägerhülse (6) am Grundkörper (10) zumindest ein Werkzeugwechselsystem angebracht ist und im Falle der Anbringung wenigstens zweier Wechselsysteme diese unterschiedlich ausgebildet sind.

14. Vorrichtung nach Anspruch 1, dadurch g e k e n n - z e i c h n e t , daß eine die Schwenkbewegung der Trägerhülse (6) in beiden Richtungen in vorgebbarem Ausmaß, ins- besondere auf 270$^\circ$ begrenzende Sperreinrichtung vorgesehen ist.

15. Vorrichtung nach Anspruch 1, dadurch g e k e n n - z e i c h n e t , daß an den an der Trägerhülse (6) vorgesehenen Aufnahmen (7) in der Arbeitsposition mit dem Hauptantrieb kuppelbare und im Spannzustand mit allen erforderlichen Fluidanschlüssen verbundene Spindelstöcke (21) insbesondere wechselbar angebracht sind.

16. Vorrichtung nach Anspruch 15, dadurch  g e k e n n - z e i c h n e t ,  daß die über den Umfang der Trägerhülse (6) verteilten Aufnahmen (7) mit unterschiedlichen Spindelstöcken (21), insbesondere für Steilkegelwerkzeuge, bestückbar sind, wobei zwischen Aufnahme und Spindelstock jeweils eine Adapterplatte (22) vorgesehen ist.

17. Vorrichtung nach Anspruch 16, dadurch  g e k e n n - z e i c h n e t ,  daß in Abhängigkeit vom jeweiligen Spindelstock (21) eine Adapterplatte (22) mit integrierter Spann-, Indexier- und gegebenenfalls Entspanneinrichtung und mit Durchleitkanälen vorgesehen ist.

18. Vorrichtung nach Anspruch 16 oder 17, dadurch  g e - k e n n z e i c h n e t ,  daß für nicht belegte Werkzeugaufnahmen (7) als Verschlußplatten ausgebildete Adapterplatten vorgesehen sind.

19. Vorrichtung nach Anspruch 15, dadurch  g e k e n n - z e i c h n e t ,  daß die Aufnahmen (7) über Adapterplatten (22) zur Ankupplung von Spindelstöcken (21) für Steilkegel unterschiedlicher Größe und/oder unterschiedlicher Spindelzahl, zur Ankupplung mehrspindeliger Spindelköpfe und zur Ankupplung von NC-Plandrehköpfen sowie Sonderköpfen, insbesondere in Form von Spindelköpfen für hydrodynamisch gelagerte Spindeln und Tieflochbohrspindelköpfen ausgebildet sind.

20. Vorrichtung nach Anspruch 19, dadurch  g e k e n n - z e i c h n e t ,  daß die zu Spindelköpfen, insbesondere NC-Plandrehköpfen führenden elektrischen Verbindungsleitungen auch bei Abkupplung vom Antrieb und bei Verschwenken der
Trägerhülse (6) nicht unterbrochen werden.

21. Vorrichtung nach einem der Ansprüche 15 bis 20, dadurch
    g e k e n n z e i c h n e t , daß Spindeldrehzahl,
    Schnittgeschwindigkeit und Drehmoment durch die über ein
    dem Hauptantrieb (20) zugeordnetes Schaltgetriebe wählbare
    Drehzahl der Hauptwelle (23) und/oder eine feste Übersetzung
    oder Untersetzung im Getriebe eines entsprechend der jewei-
    ligen Bearbeitungsaufgabe optimal auswählbaren Spindel-
    stocks (21) vorgebbar sind.

22. Vorrichtung nach Anspruch 1, dadurch   g e k e n n -
    z e i c h n e t , daß dem Zentralmodul (1) zusätzlich zu
    zumindest einem Werkzeugwechsler ein Spindelstockwechsler
    und/oder ein Wechselsystem für mehrspindelige Spindelköpfe
    zugeordnet ist.

23. Vorrichtung nach Anspruch 22, dadurch   g e k e n n -
    z e i c h n e t , daß für ein einheitliches Werkzeugmagazin ein Werkzeugwechsler mit linear verfahrbarem
    Wechselarm und drei Ansteuerpositionen vorgesehen ist,
    wobei die beiden seitlichen Positionen einem Doppelspindler oder einem asymmetrischen Einzelspindler zugeordnet sind und die mittlere Position zum Werkzeugwechsel
    bei einem Einspindelkopf dient.

24. Vorrichtung nach Anspruch 13, dadurch   g e k e n n -
    z e i c h n e t , daß einem am Grundkörper (10) oberhalb
    der Trägerhülse (6) angebrachten Magazin (35) für Einzelwerkzeuge, insbesondere Steilkegelwerkzeuge, einerseits
    ein erster Doppelwechselarm (36) mit horizontaler Schwenkachse zur Spindelkopfbestückung und andererseits ein weiterer Doppelwechselarm (37) mit vertikaler Schwenkachse
    zugeordnet ist, der in horizontaler Richtung zwischen dem
    am Grundkörper (10) vorgesehenen Magazin (35) und einem Zusatzmagazin (38, 39) verfahrbar ist.

0133456

25. Vorrichtung nach Anspruch 24, dadurch g e k e n n -
z e i c h n e t , daß das Zusatzmagazin als umlaufendes
Magazin mit einer ersten Etage (38) für mehrspindlige
Spindelköpfe und/oder Spindelstöcke und/oder Plandrehköpfe
und dergleichen und einer zweiten Etage (39) für Einzelwerkzeuge ausgebildet ist, und daß der zweite Doppelwechselarm (37) auf einen zwischen der ersten Etage (38) des Magazins und den Aufnahmen (7) an der Trägerhülse (6) wirksamen
Hauptwechsler (40) für die mehrspindligen Spindelköpfe,
Spindelstöcke und/oder Plandrehköpfe aufgesetzt ist.

26. Vorrichtung nach Anspruch 25, dadurch g e k e n n -
z e i c h n e t , daß der zweite Doppelwechselarm (37)
in Vertikalrichtung teleskopartig ausfahrbar ist.

27. Vorrichtung nach Anspruch 26, dadurch g e k e n n -
z e i c h n e t , daß der zweite Doppelwechselarm (37)
unabhängig vom Hauptwechsler (40) verschwenkbar ist.

FIG.1

FIG.2

35 36 21 34 27 37 40 1 2 6 39 38

2/2

C133456